# DEMANDE DE BREVET EUROPEEN

(11) **EP 0 894 775 A1**
(43) Date de publication de la demande: **03.02.1999**
(21) Numéro de dépôt: 98401852.3
(22) Date de dépôt: 21.07.1998
(51) Int. Cl.: C03C 17/36

(54) **Substrat en verre revêtu d'un empilement de couches minces à propriétés de réflexion dans l'infrarouge et/ou dans le domaine du rayonnement solaire**

(30) Priorité: 31.07.1997 DE 19732977
(71) Demandeur: SAINT-GOBAIN VITRAGE, 92400 Courbevoie (FR)
(72) Inventeur: Schicht, Heinz, 06925 Bethau (DE); Schmidt, Uwe, 04895 Falkenberg/Elster (DE); Kaiser, Wilfried, 04860 Torgau (DE); Hryniw, Bodo, 04860 Torgau (DE)
(74) Mandataire: Muller, René

(57) **Abrégé**

L'invention concerne un substrat transparent, notamment en verre, comprenant au moins une couche métallique à propriétés de réflexion dans l'infrarouge sous laquelle est disposée un premier revêtement anti-reflets à base d'un ou plusieurs oxyde(s) métallique(s), une couche métallique supérieure de protection, elle-même surmontée d'un deuxième revêtement anti-reflets supérieur .

Selon l'invention le deuxième revêtement anti-reflets supérieur comprend au moins une couche à base d'oxyde d'étain SnO₂ surmontée d'une dernière couche à base d'oxyde de zirconium ZrO₂.

## Description

La présente invention concerne un substrat transparent, notamment en verre, comprenant au moins une couche métallique à propriétés de réflexion dans l'infrarouge sous laquelle est disposée un premier revêtement anti-reflets à base d'un ou plusieurs oxyde(s) métallique(s), une couche métallique supérieure de protection, elle-même surmontée d'un deuxième revêtement anti-reflets supérieur.

Les vitrages comprenant de tels empilements de couches trouvent largement leur application tant comme verres de protection solaire que comme verres calorifuges. Ils sont actuellement fabriqués dans l'industrie suivant le procédé de la pulvérisation cathodique réactive assistée par champ magnétique dans des installations à défilement continu. Pour diverses raisons technologiques, les couches d'oxyde d'étain se sont révélées particulièrement intéressantes comme couches anti-reflets.

Il est connu que les substrats munis d'empilements de couches du type décrit comprenant des couches anti-reflets à base d'oxyde d'étain sont relativement sensibles aux sollicitations mécanique et chimique. Même lorsque les couches sont protégées dans le produit fini contre de telles sollicitations, du fait que les vitrages revêtus sont transformés, en règle générale, en vitrages isolants ou en vitrages feuilletés et que les couches sont alors situées à l'intérieur, elles sont cependant exposées à de telles sollicitations pendant le transport jusqu'au lieu de transformation et pendant la transformation, par exemple, dans la machine de lavage et lors de la manipulation.

Différentes solutions pour augmenter la capacité de résistance mécanique et chimique de tels empilements de couches comprenant un revêtement anti-reflets supérieur comprenant une couche à base de SnO₂ ont déjà été proposées. Par exemple, des traitements de stabilisation a posteriori, tels qu'ils sont décrits, par exemple, dans le document DE 43 23 654 C2, en font également partie.

L'invention a pour but de proposer un substrat muni d'un empilement de couches tel que décrit ci-dessus comprenant un revêtement anti-reflets supérieur comprenant une couche à base d'oxyde d'étain ayant une plus grande capacité de résistance aux sollicitations mécanique et chimique.

Le deuxième revêtement anti-reflets supérieur comprend au moins une couche à base d'oxyde d'étain SnO₂ surmontée d'une dernière couche à base d'oxyde de zirconium ZrO₂.

Il est en effet connu de former le revêtement anti-reflets supérieur en totalité d'oxyde de zirconium (DE 41 09 708) ou d'un oxyde mixte d'étain et d'oxyde de zirconium (DE 39 06 374) comprenant, par exemple, 28% de Zr et 72% de Sn. Il est également connu (EP 0 304 234) d'appliquer sur la couche d'argent une couche d'arrêt ayant la structure mixte oxyde d'étain-oxyde de zirconium-oxyde d'étain. Il appartient également à l'état connu de la technique de prévoir sur la couche d'argent une couche de zirconium métallique et par-dessus une couche antireflet d'oxyde d'étain. Aucun de ces empilements de couches connus n'atteint cependant les propriétés particulièrement favorables en matière de capacité de résistance mécanique et chimique telles qu'elles sont atteintes par la structure conforme à l'invention.

La structure conforme à l'invention du revêtement anti-reflets supérieur non seulement est particulièrement résistante à la sollicitation mécanique en raison de la grande dureté connue de l'oxyde de zirconium, mais de plus procure de façon surprenante une protection extrêmement élevée des couches sous-jacentes contre une attaque chimique.

Des domaines préférés pour les épaisseurs des couches du revêtement anti-reflets supérieur et pour la composition des autres couches ressortent des revendications dépendantes et de l'exemple d'exécution ci-après.

Une explication possible de l'effet favorable inattendu sur la capacité de résistance chimique peut être entrevue dans le fait que, lors de la pulvérisation cathodique réactive, l'oxyde de zirconium croît sur la surface de l'oxyde d'étain de façon particulièrement régulière et serrée sans formation d'îlot en une couche cohérente. Il semble que, lors de la condensation de l'oxyde de zirconium sur la surface de l'oxyde d'étain existant déjà à l'état de corps solide, ladite mouillabilité de cette surface par l'oxyde de zirconium joue également un rôle essentiel et que les grandeurs dites "liaisons ioniques partielles" des deux oxydes jouent éventuellement un rôle important pour la mouillabilité. Les effets observés révèlent en tout cas que déjà pour ces deux oxydes métalliques des conditions particulièrement favorables existent pour un bon mouillage de l'oxyde d'étain. De plus, il peut être admis qu'à l'interface immédiat de ces deux oxydes, il se forme des composés du genre stanate de zirconium de type Spinelle dont la densité de tassement des atomes est particulièrement élevée, qui participent également à la protection particulièrement efficace des couches métalliques sous-jacentes contre les ions pénétrant de l'extérieur.

L'invention et les améliorations ainsi réalisées du susbtrat muni de l'empilement de couches sont illustrées ci-après à l'aide d'un exemple comparatif et d'un exemple selon l'invention.

### Exemple comparatif.

A titre d'exemple comparatif, on prépare un susbtrat muni d'un empilement de couches ayant la structure décrite dans le document EP 0 593 883 B1. Cette structure de couches a également été développée du point de vue d'une haute résistance mécanique aux conditions ambiantes et au rayage et doit empêcher même pendant une longue durée une altération chimique de la couche d'argent et de la couche de protection métallique appliquée par-dessus.

L'empilement de couches qui a été appliqué suivant le procédé de la pulvérisation cathodique réactive sur des vitrages en verre flotté présentait la séquence suivante :

Verre-SnO₂-ZnO-Ag-Ti-ZnO-SnO₂-ZnO-TiO₂

Le tableau 1 ci-dessous indique en nm les épaisseurs des couches correspondantes :

**TABLEAU 1**

| **Verre** | **Epaisseurs (nm)** |
|---|---|
| SnO₂ | 20 |
| ZnO | 17 |
| Ag | 11 |
| Ti | 3 |
| ZnO | 10 |
| SnO₂ | 17 |
| ZnO | 10 |
| TiO₂ | 3 |

Des échantillons munis de ce type d'empilement de couches ont été soumis aux tests suivants :
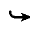 A) test dit "Plattenmethode nack Kimmel et al.", Z. Glastechnische Berichte 59 (1986) pages 252 et suivantes. Le comportement de lixiviation d'Ag* de la couche est déterminé suivant cette méthode;
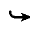 B) test de l'eau de condensation, suivant lequel les éprouvettes sont exposées à une température de 60°C dans une humidité relative de l'air de 100%;
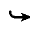 C) test de lavage suivant ASTMD 2486;
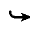 D) test de variations climatiques suivant DIN 52344;
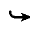 E) test de pulvérisation de sel suivant DIN 50021, et
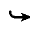 F) test à l'acide chlorhydrique suivant lequel l'éprouvette de verre est immergée pendant 8 minutes dans du HCl 0,01n à 38°C et la perte d'émissivité est déterminée en %.

Les tests ont donné avec cet empilement de couches de comparaison les résultats suivants qui indiquent pour chacun des tests B, D et E le temps et, pour le test C, le nombre de passes après lesquelles les premiers défauts visibles de la couche sont apparus.

| Test | A | B | C | D | E | F |
|---|---|---|---|---|---|---|
| Résultat | 0,08 mg/l | 192 h | 1000 passes | 15 h | 24 h | 20% |

Dans l'ensemble, les résultats des essais montrent qu'avec cet empilement de couches un degré élevé de capacité de résistance mécanique et chimique est atteint. La perte d'émissivité déterminée par le test à l'acide chlorhydrique, de même que le test de variations climatiques et les résultats de la méthode des plaques (selon Kimmel) montrent cependant qu'une attaque corrosive du système de couches se produit avec certains réactifs.

### Exemple selon l'invention.

Suivant le même procédé de la pulvérisation cathodique réactive, on a muni des vitrages en verre flotté de la structure de couches conforme à l'invention ci-après :

Verre-SnO₂-ZnO:Al:Si-Ag-TiPd-SnO₂-ZrO₂

Le tableau 2 ci-dessous indique en nm les épaisseurs de couches correspondantes :

**TABLEAU 2**

| **Verre** | **Epaisseurs (nm)** |
|---|---|
| SnO₂ | 20 |
| ZnO:Al:Si | 17 |
| Ag | 11 |
| TiPd | 2 |
| SnO₂ | 28 |
| ZrO₂ | 12 |

La couche à base d'oxyde de zinc du revêtement anti-reflets inférieur a été déposé réactivement à partir d'une cible de zinc métallique auquel 1,2% en poids de Al et 0,1% en poids de Si se trouvaient alliés. La couche de protection métallique en TiPd a été pulvérisée dans une atmosphère d'argon pur à partir d'une cible de titane à laquelle 0,2% en poids de Pd était allié. Le dépôt de la dernière couche en ZrO₂ a eu lieu par pulvérisation réactive de cibles de zircon dans une atmosphère de Ar/O₂ en mode opératoire DMS, c'est-à-dire avec des cathodes de pulvérisation à magnétron double.

Tout comme dans l'exemple comparatif, le dépôt de l'empilement de couches a eu lieu dans une installation de pulvérisation cathodique assistée par champ magnétique à défilement continu à une vitesse de défilement des vitrages de 6,22 m/min.

Des échantillons munis de cet empilement de couches ont été soumis aux mêmes essais que les échantillons de l'exemple comparatif. Les tests ont donné sur cet empilement de couches conforme à l'invention les résultats suivants :

| Test | A | B | C | D | E | F |
|---|---|---|---|---|---|---|
| Résultat | 0,03 mg/l | 250 h | 1600 passes | 24 h | 24 h | 8% |

Les résultats montrent que malgré une structure de l'empilement de couches dans l'ensemble plus simple, la capacité de résistance mécanique et chimique de l'empilement de couches est non seulement équivalente, mais dans certains tests même supérieure à celle de l'empilement de couches de l'exemple comparatif.

## Revendications

1. Ssubstrat transparent, notamment en verre, comprenant au moins une couche métallique à propriétés de réflexion dans l'infrarouge sous laquelle est disposée un premier revêtement anti-reflets à base d'un ou plusieurs oxyde(s) métallique(s), une couche métallique supérieure de protection, elle-même surmontée d'un deuxième revêtement anti-reflets supérieur, ***caractérisé en ce que*** le deuxième revêtement anti-reflets supérieur comprend au moins une couche à base d'oxyde d'étain SnO₂ surmontée d'une dernière couche à base d'oxyde de zirconium ZrO₂.

2. Substrat selon la revendication 1, ***caractérisé en ce que*** l'épaisseur de la dernière couche à base d'oxyde de zirconium est d'au moins 6 nm.

3. Substrat selon la revendication 2, ***caractérisé en ce que*** la couche à base d'oxyde d'étain a une épaisseur de 20 à 32 nm et ***en ce que*** la couche à base d'oxyde de zirconium a une épaisseur de 8 à 20 nm.

4. Substrat selon l'une quelconque des revendications 1 à 3,
***caractérisé en ce que*** la couche de protection métallique est à base de titane Ti dopé avec 0,1 à 1% en poids de Pd.

5. Substrat selon l'une quelconque des revendications 1 à 4,
***caractérisé en ce que*** la couche anti-reflets inférieur comprend au moins une couche à base de SnO₂ et une couche de ZnO, contiguë à la couche à propriétés de réflexion dans l'infrarouge, qui est pulvérisée à partir d'une cible de zinc à laquelle sont alliés 0,5 à 2% en poids de Al et 0,05 à 1% en poids de Si.

6. Substrat selon l'une quelconque des revendications précédentes, ***caractérisé en ce que*** la couche métallique à propriétés de réflexion dans l'infrarouge est à base d'argent Ag.

7. Vitrage bas-émissif ou anti-solaire incorporant le substrat selon l'une quelconque des revendications précédentes.
